# EUROPÄISCHE PATENTSCHRIFT

(11) **EP 1 922 455 B1**
(45) Veröffentlichungstag und Bekanntmachung des Hinweises auf die Patenterteilung: **31.12.2014**
(21) Anmeldenummer: 06777158.4
(22) Anmeldetag: 04.09.2006
(51) Int. Cl.: E04F 15/02, E04F 13/08

(54) **Paneel zum mechanischen Verbinden mit einem weiteren Paneel durch Verschwenken**
Panel for mechanical connection with a further panel by angling
Panneau destiné à être connecté mécaniquement à un autre panneau par rotation

(30) Priorität: 07.09.2005 DE 202005014132 U
(43) Veröffentlichungstag der Anmeldung: 21.05.2008
(73) Patentinhaber: tilo GmbH, 4923 Lohnsburg (AT)
(72) Erfinder: KIEFEL, Heinz, 94535 Eging (DE); SCHRATTENECKER, Franz, 4923 Lohnsburg (AT)
(74) Vertreter: Kalkoff & Partner
(86) Internationale Anmeldenummer: PCT/EP2006/008604
(87) Internationale Veröffentlichungsnummer: WO 2007/028560

(56) Entgegenhaltungen:
- EP-A- 1 283 313
- EP-A2- 1 380 710
- WO-A-01/77461
- WO-A-97/47834
- WO-A-2004/079130

## Beschreibung

Die Erfindung betrifft ein Paneel aus Holz oder Holzwerkstoff, zur Verbindung mit anderen gleichartigen Paneelen, insbesondere zur Herstellung von Wand-, Decken- oder Fußbodenflächen.

Derartige Paneele sind bekannt. Sie weisen mindestens zwei profilierte Kanten auf, eine erste Kante ist mit eine Nutprofil versehen, eine zweite Kante mit einem korrespondieren Federprofil. Nut- und Federprofil legen zwei Paneele in gleicher Höhe fest. Zusätzlich weisen die Paneele Verriegelungsmittel auf, die zwei Paneele in gleicher Ebene festlegen, also ein Lösen der Paneele durch Auseinanderziehen verhindern. Ein Verschieben der Paneele parallel zueinander ist in der Regel noch möglich. Die so hergerichteten Paneele werden nach einer ersten Ausführungsform als sogenannte "Klick-Paneele" mit einem Profil angeboten, dass als Rastverbindung ausgelegt ist. Nach einer zweiten Ausführungsform, die Gegenstand der hier vorliegenden Erfindung ist, werden solche Paneele durch Schwenken miteinander verbunden.

Das in der DE 10021897 (Hornitex) beschriebene Paneel kann mit Blick auf die Erfindung als gattungsbildender Stand der Technik angesehen werden. Allerdings zeigt die Praxis, dass das kraftschlüssig ausgelegte Nut- und Federprofil beim Fügen der Paneele zum Spalten des Paneels im Bereich des Nutgrunds führt. Die Klemmkraft, die an den Kontaktflächen der Verriegelungsmittel erzeugt wird, verstärkt zum einen die Spaltneigung im Bereich des Nutgrunds. Zum anderen werden Scherkräfte in Richtung auf das freie Ende der langen Nutwange aufgebaut, das die Kontaktfläche aufweist.

WO 2004/079 130 (Välinge) offenbart ein Paneel mit einem Nut-Federprofil, dessen untere Nutwange am freien Ende eine größere Stärke aufweist als im Bereich unter dem freien Ende der oberen Nutwange.

Es ist daher Aufgabe der Erfindung, ein Paneel bereitzustellen, das zum mechanischen Verbinden mit einem anderen, gleichartigen Paneel hergerichtet ist, wobei gewährleistet ist, dass keine Schäden beim Verlegen auftreten.

Das erfindungsgemäße Paneel weist hinsichtlich des Nut- und Federprofils und der Verriegelungsmittel bekannte Merkmale auf. Es ist hergerichtet zum mechanischen Verbinden mit mindestens einem weiteren, gleichartigen Paneel durch Verschwenken. Das Nut- und Federprofil dient zum Festlegen der Paneele in gleicher Höhe zueinander. Das Nutprofil weist eine kurze Nutwange, einen Nutgrund und eine lange Nutwange an mindestens einer Seite des Paneels auf, wobei die lange Nutwange an ihrem freien Ende eine größere Stärke aufweist als im Bereich des Nutgrunds. Ein mit dem Nutprofil korrespondierendes Federprofil ist an mindestens einer weiteren Seite des Paneels ausgebildet, Nut und Feder weisen im gefügten Zustand jeweils obere Anlageflächen, die zur Oberfläche des Paneels geneigt sind und untere Anlageflächen auf, die gerundet sind.

Die Verriegelungsmittel dienen zum Festlegen der Paneele in gleicher Ebene zueinander. Sie weisen eine Verriegelungsfläche an der Feder und eine Verriegelungsfläche an der Nut auf, wobei die Verriegelungsflächen an der Nut und an der Feder zwischen den Oberflächen des Paneels in Höhe des Nutgrunds angeordnet sind. Bei den Oberflächen des Paneels handelt es sich um die Oberseite und die Unterseite des Paneels, die Profile und Verriegelungsmittel sind jeweils an Schmalseiten des Paneels angebracht.

Die wesentliche Maßnahme zur Vermeidung von Schäden am Paneel beim Verlegen, insbesondere zur Vermeidung von Spalten im Bereich des Nutgrunds besteht darin, Nut und Feder im Bereich der Anlageflächen formschlüssig auszubilden, nicht aber klemmend. Die Erkenntnis, auf der die Erfindung aufbaut, zeigt, dass Nut und Feder das Profil nur hinsichtlich der Festlegung der Höhe der Paneele zueinander definieren. Dabei ist es nachteilig, wenn Nut und Feder klemmend ineinandergreifen, weil in Folge der Spaltneigung auch die Festlegung der Höhe nicht präzise erfolgt. Es ist völlig ausreichend, wenn Nut und Feder ohne Verformung ineinandergreifen.

Gleiches gilt für die Verriegelungsmittel. Auch hier wurde erfindungsgemäß das Risiko von Schubspannungen abgebaut, so dass die Neigung zur Rissbildung minimiert oder sogar ausgeschlossen wird. Wesentliche Maßnahme ist hier, dass die Höhe H der Verriegelungsflächen nicht mehr als 20% der maximalen Höhe M der langen Nutwange beträgt. Es hat sich durch Versuche herausgestellt, dass ein Profil mit geringer Höhe der Sicherungsflächen besonders wirtschaftlich herzustellen ist. Hier ist als besonderer Vorteil anzumerken, dass bei geringer Höhe der Verriegelungsflächen eine geringe Neigung zum Spalten des Paneels festzustellen ist. Bezogen auf die maximale Höhe M der langen Nutwange beträgt die Höhe H der Verriegelungsfläche erfindungsgemäß nicht mehr als 15 %, bevorzugt nicht mehr als 12%. Damit ist zum Ausformen der Verriegelungsmittel nur wenig Material aus der langen Nutwange -und korrespondierend auch aus dem federseitigen Profil - herauszunehmen. Dies spart Werkzeug und ermöglicht ein stabiles Profil, denn das freie Ende der langen Nutwange ist nach dem erfindungsgemäß geringeren Materialverlust stärker dimensioniert als bisher.

Weiter ist es wesentlich, dass die Oberseite der langen Nutwange mindestens bezogen auf die Oberseite des Paneels abschnittsweise schräg angeordnet ist. Es hat sich als vorteilhaft erwiesen, wenn die Oberseite der langen Nutwange mindestens abschnittsweise in einem Winkel ε ausgeführt ist, der flacher ist als der Winkel δ. Der Winkel ε ist insbesondere kleiner als 10°, er beträgt bevorzugt bis zu 7°, besonders bevorzugt bis zu 5°. Allgemein gesagt ist der Winkel ε erfindungsgemäß etwa halb so groß wie der Winkel δ.

Eine weitere vorteilhafte Maßnahme, mit der ein Spalten der gefügten Paneele bzw. ein Spalten beim Fügen der Paneele verhindert wird, ist das Vorsehen von Freiräumen zwischen dem freien Ende der langen Nutwange und der Feder mit Ausnahme der Sicherungsflächen. Ein erster Freiraum ist zum einen zwischen Feder und unterer Nutwange vorgesehen. Er erstreckt sich von der unteren Anlagefläche bis zur Sicherungsfläche. Der Freiraum dient zum einen zum Aufnehmen von Staub und Verunreinigungen, die beim Verlegen nicht aufzuschließen sind. Zum anderen werden Fertigungsabweichungen bei der Herstellung des Profils kompensiert. Ein zweiter Freiraum setzt am oberen Ende der Verriegelungsflächen an und erstreckt sich zwischen dem Paneel, dass mit dem Nutprofil versehen ist und dem Paneel, das mit dem Federprofil versehen ist. Auch hier ist Raum zum Aufnehmen von Verunreinigungen. Zudem gewährleistet der Freiraum aber auch, dass kontrollierte und berechenbare Verhältnisse bei zwei gefügten Paneelen entstehen, die lediglich im Bereich der Anlageflächen und der Verriegelungsflächen in Kontakt stehen. Schließlich hat sich als wesentlicher Vorteil herausgestellt, dass das die Freiräume beim Verlegen von Paneelen auf einem Untergrund, der nicht vollständig eben ist, ausgleichend wirken. Das Profil kann sich durch minimale Verformungen besser an ungleichmäßige Untergründe anpassen, die gerade bei Verlegung von Paneelen in Altbauten häufig anzutreffen sind.

Eine weitere Ausführungsform des erfindungsgemäßen Profils hat sich ebenfalls als vorteilhaft erwiesen. Der Winkel zwischen der Verriegelungsfläche des Nutprofils und der sich zum Nutgrund an diese Sicherungsfläche anschließenden Oberfläche der Nutwange ist bei bekannten Profilen möglichst klein, in der Regel um 90 ° gewählt. Dies deshalb, weil Fachleute der Auffassung sind, dass dadurch der Auszieh-Widerstand besonders hoch ist bzw. dass eine solch steile Verriegelungsfläche erforderlich ist, um ein wirksames Verriegeln von Nut und Feder zu gewährleisten. Es wird jedoch vorgeschlagen, dass der Winkel γ mindestens 125°, bevorzugt 130°, besonders bevorzugt 135° beträgt. In diesem Bereich ist ein Auscinanderziehen gefügter Paneele in der Ebene, in der sie verlegt sind, nicht möglich. Der Auszieh-Widerstand ist dadurch optimiert, dass die Neigung des Holzes oder Holzwerkstoffs in diesem Teil des Profils unter Zugbelastung zu splittern, durch den großen Winkel β minimiert ist.

Eine weitere Maßnahme, die sich als vorteilhaft erweist, besteht darin, den Winkel β, der sich zwischen einer Verbindung vom oberen Ende der Verriegelungsfläche am Nutprofil zum Ende der Oberfläche des Nutprofils am Paneel einerseits und der Verlängerung der Verriegelungsfläche am Nutprofil andererseits aufspannt, mit mindestens 90° zu bemessen. Es hat sich überraschenderweise bei Versuchen herausgestellt, dass ein derart großer Winkel β, der sich ohne weiteres bis auf 95° oder bis auf 105° erstrecken kann, trotzdem eine wirksame Verriegelung gewährleistet.

Durch die deutlich stärker als bisher geneigte Verriegelungsfläche bzw. den größeren Winkel β werden zwei Vorteile erreicht. Zum einen vergrößert sich die Öffnung der Nut, so dass das Einführen der Feder einfacher wird. Zum anderen zeigen Versuche, dass der Auszugswiderstand des erfindungsgemäßen Profils, also die Kraft, die zum Auseinanderziehen zweier gefügter Paneele erforderlich ist, für die erfindungsgemäß vorgeschlagene Ausführung des Profils deutlich höher ist als für Profile nach dem Stand der Technik. Dies deshalb, weil mit größerem Winkel β die Neigung zum Spalten der Nutwange im Bereich der Verriegelungsfläche verringert ist.

Wesentliche Maßnahme zum werkzeugsparenden Herausarbeiten eines Profils mit geringer Höhe der Verriegelungsflächen ist, dass die Anlagefläche an der kurzen Nutwange und ein Oberflächenabschnitt, der das freie Ende der langen Nutwange zur Oberseite des Paneels hin begrenzt, beide schräg zur Oberseite des Paneels angeordnet sind. Bevorzugt sind auch weitere Abschnitte der Oberseite der langen Nutwange schräg zur Oberseite des Paneels angeordnet. In diesem Fall genügt ein Werkzeug, in der Regel eine Fräse, um den Nutgrund und ggf. die Oberseite der langen Nutwange herauszuarbeiten. Bei tiefer ausgearbeiteten Profilen sind zwei Werkzeuge erforderlich, da ein lineares Zuführen des Werkzeugs bis in den Nutgrund und von dort bis an den Ansatz der Verriegelungsfläche nicht möglich war.

Die Anlagefläche an der kurzen Nutwange und ein Oberflächenabschnitt am freien Ende der langen Nutwange, der dem Nutgrund zugeneigt ist, sind in einem Winkel δ von mindestens 5°, bevorzugt von mindestens 10°, besonders bevorzugt von mindestens 20° zur Oberseite des Paneels angeordnet. Diese Gestaltung der Anlagefläche an der kurzen Nutwange -und damit in der Regel auch der korrespondierenden Anlagefläche an der Feder- sowie des Oberflächenabschnitts am freien Ende der langen Nutwange, der dem Nutgrund zugeneigt ist, in einem Winkel δ von mindestens 5°, aber bevorzugt von mehr als 5°, ermöglicht ein werkzeugsparendes Ausarbeiten des Profils. Der Werkzeugeinsatz wird dadurch reduziert, dass weniger Werkzeuge zum Herstellen des Profils erforderlich sind als bei bekannten Profilen, dass diese Werkzeuge zudem weniger Material abtragen müssen, so dass dadurch der Verschleiß an den Werkzeugen minimiert wird.

Nach einer besonders bevorzugten Ausführungsform kann ein erfindungsgemäßes Profil bei einem vierseitigen Profil zwei Schmalseiten mit Nutprofil und zwei Seiten mit Federprofil aufweisen. Derartige Paneele können als durch werksseitiges Ausformen des Profils vollständig verlegefertig hergerichtet werden.

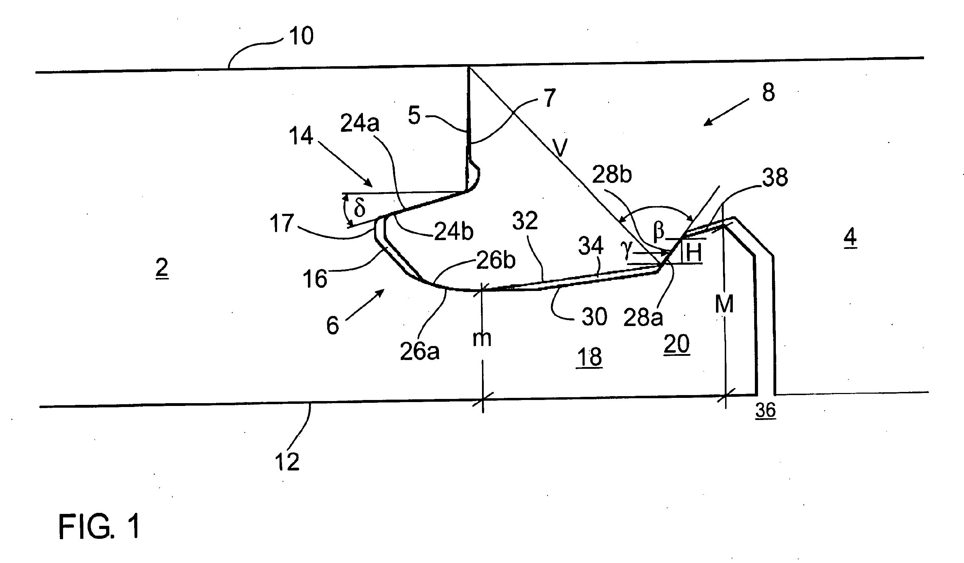

Im Folgenden werden Ausführungsvarianten der Erfindung am Beispiel der Fig. 1 näher erläutert. Es zeigt:
Fig. 1 einen Schnitt durch ein erfindungsgemäßes Profil (erste Ausführungsform)
Fig. 2 einen Schnitt durch ein erfindungsgemäßes Profil (zweite Ausführungsform)

Fig. 1 zeigt ein Paneel 2 aus hochdichter Faserplatte (HDF) mit einem Nutprofil 6 an einer Schmalseite 5. Das Paneel kann genau so auch aus Massivholz gefertigt werden. Das Paneel 2 steht mit einem zweiten Paneel 4 im Eingriff, das an einer Schmalseite 7 ein korrespondierendes Federprofil 8 aufweist. Das Nutprofil 6 ist zwischen der Oberseite 10 und der Unterseite 12 des Paneels in einer Schmalseite 5 der hochdichten Faserplatte ausgeformt, ebenso wie das Federprofil 8 an der Schmalseite 7 des Paneels 4.

Das Nutprofil 6 weist eine kurze Nutwange 14 auf, einen Nutgrund 16 und eine lange Nutwange 18. Der Nutgrund 16 ist mit einer Basis 17 ausgeführt, die in gerundeter Form in die Nutwangen 14 und 18 übergeht, um Kerbspannungen zu vermeiden und um die Spaltungsneigung beim Fügen der Paneele 2 und 4 zu minimieren. Die lange Nutwange 18 erstreckt sich vom Nutgrund bis zu einem freien Ende 20, das nicht mehr von der kurzen Nutwange 14 überdeckt ist. Das freie Ende 20 der langen Nutwange 18 weist eine größere Höhe M auf als in dem Bereich der unter dem freien Ende der kurzen Nutwange 14 liegt, und der in Fig. 1 als Höhe m gekennzeichnet ist.

Im gefügten Zustand, so wie in Fig. 1 dargestellt, weisen Nutprofil 6 und Federprofil 8 obere Anlageflächen 24a, 24b auf, die -bezogen auf die Oberseite 10- schräg angeordnet sind. Untere Anlageflächen 26a, 26b sind gerundet ausgeführt, was das Einführen der Feder in die Nut erleichtert.

Dadurch, dass die längere Nutwange 18 von der Höhe m im Bereich unter dem freien Ende der kurzen Nutwange zur Höhe M im Bereich des freien Endes 20 ansteigt, kann im Bereich dieses Anstiegs eine Verriegelungsfläche 28a angeordnet werden. Eine korrespondierende Verriegelungsfläche 28b ist im Bereich des Federprofils 8 angebracht. Die Höhe H dieser Verriegelungsflächen 28a, 28b -bezogen auf die Höhe M des freien Endes 20- beträgt bei dem Profil gemäß Fig.1 14 %. Die Verriegelungsflächen 28a, 28b sind zwischen Oberseite 10 und Unterseite 12 der Paneele 2, 4 in der Höhe des Nutgrundes 16 angeordnet.

Die Verriegelungsflächen 28a, 28b sind derart ausgerichtet, dass eine Verlängerung der Verriegelungsflächen 28a, 28b mit einer Verbindungslinie V, die sich von der Oberseite 10 des Paneels 2 am Ansatz des Nutprofils 6 zum oberen Ende der Verriegelungsfläche 28 a einen Winkel β von 90° bildet. Weiter bildet die Verriegelungsfläche 28a mit der Oberseite 30 der langen Nutwange 18 einen Winkel γ von 135°.

Zwischen den Verriegelungsflächen 28a, 28b und den unteren Anlageflächen 26a, 26b erstreckt sich ein Freiraum 34, der durch die Oberseite 30 der langen Nutwange 18 und durch die Unterseite 32 des Federprofils 8 begrenzt ist. Zwischen dem oberen Ende der Verriegelungsflächen 28a, 28b, dem Federprofil 8 und der Unterseite 12 der Paneele 2, 4 erstreckt sich ein Freiraum 36.

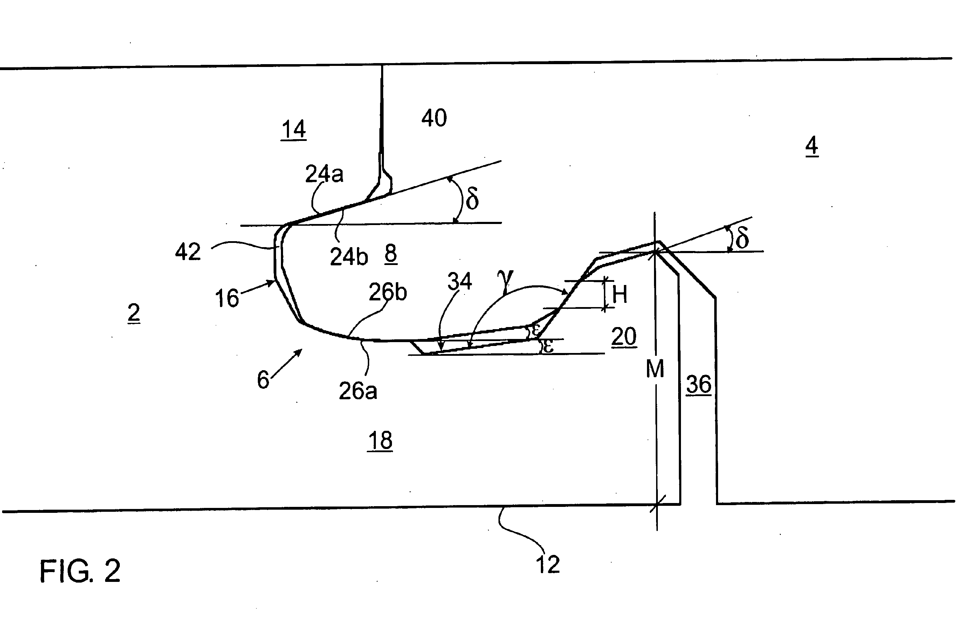

Fig. 1 zeigt weiter ein Merkmal des Nutprofils, dass das werkzeugsparenden Herausarbeiten eines Profils mit geringer Höhe der Verriegelungsflächen ermöglicht. Die Anlagefläche 24a an der kurzen Nutwange und ein Oberflächenabschnitt 38, der das freie Ende 20 der langen Nutwange zur Oberseite 10 des Paneels 2 hin begrenzt, sind beide in einem Winkel δ von 15° schräg zur Oberseite 10 des Paneels 2 angeordnet. Auch die Oberseite 30 der langen Nutwange 18 und die Unterseite 32 der Feder sind -bezogen auf die Oberseite 10 des Paneels- geneigt. Sie sind in einem kleineren Winkel als dem Winkel δ ausgearbeitet. Der Winkel ε (siehe Fig. 2) von 7° ist nach dieser bevorzugten Ausführungsform ungefähr halb so groß wie der Winkel δ. Bei einer solchen Ausführungsform des Nutprofils genügt ein Werkzeug, in der Regel eine Fräse, um den Nutgrund 16 und ggf. die Oberseite 30 der langen Nutwange 18 herauszuarbeiten. Bei tiefer ausgearbeiteten Profilen sind zwei Werkzeuge erforderlich, da ein lineares Zuführen eines einzigen Werkzeugs bis in den Nutgrund 16 und von dort bis an den Ansatz der Verriegelungsfläche 28a nicht möglich war.

Fig. 2 zeigt ein Profil aus Fichtenholz. Gleiche Bezugszeichen wie in Fig.1 bezeichnen auch jeweils gleiche Merkmale. Das Profil aus Fichtenholz kann unmittelbar und ausschließlich aus Massivholz hergestellt sein. Üblich ist es jedoch, dass das Fichtenholz als Kernmaterial eingesetzt ist, wobei die Deckschicht aus anderem Holzfurnier, Kork, Linoleum oder dergleichen bestehen kann. Als Gegenzug kann die Unterseite des Massivholzprofils mit einem festen Papier beschichtet sein, dass Verformungskräfte aufnimmt. Weiter kann eine Trittschalldämmung aus Kunststoff, Kork oder Filz auf der Unterseite des Profils aufgebracht sein.

Das Verhältnis der Höhe H der Verriegelungsflächen 28a, 28b, also der Höhe, über die die Verriegelungsflächen 28a, 28b aneinander liegen, und der Höhe M, also der maximalen Höhe des freien Endes 20 der langen Nutwange 18, beträgt bei dem Ausführungsbeispiel nach Fig. 2 11%. Der Winkel δ beträgt 15°. Der Winkel γ beträgt 133°. Der Winkel ε beträgt 7°. Freiräume 34 und 36 erstrecken sich jeweils beidseits der Verriegelungsflächen 28a, 28b. Weitere Freiräume 40 und 42 erstrecken sich jeweils beidseits der oberen Anlageflächen 24a, 24b. Die unteren Anlageflächen 26a, 26b grenzen an Freiräume 42 und 34. Dadurch sind die Flächen, die die Festlegung in der Höhe und in der Ebene bestimmen, eindeutig definiert und es wird ein Formschluss erreicht, der jedoch keine Verformung des Profils beim Verlegen verursacht. Das Entstehen von Spaltkräften beim Verlegen wird damit verhindert.

Das erfindungsgemäße Profil nach Anspruch 2 erfordert nur einen geringen Werkzeugeinsatz. Zum einen werden wenig Werkzeuge eingesetzt, weil insbesondere der Nutgrund in einem Arbeitsgang mit einem Werkzeug ausgeformt werden kann. Zum anderen erfordert das Profil insgesamt durch die flache Ausbildung einen geringen Materialabtrag. Dadurch werden die Werkzeuge wenig beansprucht und der Verschleiß ist entsprechend gering. Verlängerte Standzeiten und geringe Eingriffe in die Produktion zum Wechseln der Werkzeuge sind die Folge.

Der geringe Materialabtrag führt dazu, dass die lange Nutwange 18 stärkere Dimensionen aufweist als bisher. Es hat sich als zusätzlicher, unerwarteter Vorteil herausgestellt, dass diese Nutwange 18 deshalb schon bei der Herstellung durch die Fräswerkzeuge weniger in Schwingung versetzt wird, so dass das Profil exakter herzustellen ist. Die Verlegung wird dadurch weiter vereinfacht.

## Patentansprüche

1. Paneel, hergerichtet zum mechanischen Verbinden mit mindestens einem weiteren, gleichartigen Paneel durch Verschwenken, mit
- einem Nut- und Federprofil (6, 8) zum formschlüssigen, aber nicht klemmenden Festlegen des Paneels (2, 4) mit dem weiteren Paneel in gleicher Höhe zueinander, aufweisend ein Nutprofil (6) mit einer kurzen Nutwange (14), einem Nutgrund (16) und einer langen Nutwange (18) an mindestens einer Seite des Paneels und ein mit dem Nutprofil (6) korrespondierendes Federprofil (8) an mindestens einer anderen Seite des Paneels, wobei die lange Nutwange (18) an ihrem freien Ende (20) eine größere Stärke aufweist als im Bereich unter dem freien Ende der kurzen Nutwange (14), und wobei Nut und Feder im gefügten Zustand beider Paneele jeweils obere Anlageflächen (24a, 24b), die zur Oberfläche (10) des Paneels (2, 4) geneigt sind und untere Anlageflächen (26a, 26b) aufweisen, die gerundet sind, und mit
- Verriegelungsmitteln (28a, 28b) zum Festlegen des Paneels (2, 4) mit dem weiteren Paneel in gleicher Ebene zueinander, aufweisend eine Verriegelungsfläche (28b) an der Feder und eine Verriegelungsfläche (28a) an der Nut, wobei die Verriegelungsflächen (28a, b) an der Nut und an der Feder zwischen den Oberflächen (10, 12) der Paneele (2, 4)-in der Höhe des Nutgrunds (16) angeordnet sind, **dadurch gekennzeichnet, dass** die Höhe der Verriegelungsflächen (28a, 28b) nicht mehr als 20% der maximalen Höhe der langen Nutwange (18) beträgt,
- mindestens die obere Anlagefläche (24a) der Nut und der dem Nutgrund (16) zugewandte Oberflächenabschnitt (38) am freien Ende (20) der langen Nutwange (18) schräg zur Oberseite (10) des Paneels (2) gestellt sind, in einem Winkel δ und
- mindestens Abschnitte der Oberseite (30) der langen Nutwange (18) in einem Winkel ε zur Oberseite des Paneels angeordnet sind, der etwa halb so groß ist wie der Winkel δ.

2. Paneel nach Anspruch 1, **dadurch gekennzeichnet, dass** der Winkel ε bis zu 10°, bevorzugt bis zu 7°, besonders bevorzugt bis zu 5° bezogen auf die Oberseite (10) des Paneels (2) beträgt.

3. Paneel nach Anspruch 1, **dadurch gekennzeichnet, dass** im gefügten Zustand zweier Paneele mit Ausnahme der Verriegelungsflächen (28a, 28b) zwischen dem freien Ende (20) der langen Nutwange (18) und der Feder Freiräume (34, 36) vorgesehen sind.

## Claims

1. A panel, prepared for mechanical connection with at least one further similar panel by pivoting, comprising:
- a groove and tongue profile (6, 8) for fixing the panel (2, 4) in a form-locking, but non-clamping manner to the further panel at the same height with respect to each other, including a groove profile (6) having a short groove cheek (14), a groove bottom (16) and a long groove cheek (18) at least on one side of the panel, and a tongue profile (8) corresponding to the groove profile (6) on at least one other side of the panel, wherein the long groove cheek (18), at its free end (20), has a greater thickness than in the area under the free end of the short groove cheek (14), and wherein the groove and tongue in the joined state of both panels each have top bearing surfaces (24a, 24b) inclined with respect to the top surface (10) of the panel (2, 4), and bottom bearing surfaces (26a, 26b), which are rounded, and comprising
- locking means (28a, 28b) for fixing the panel (2, 4) with the further panel in the same plane with respect to each other, including a locking face (28b) on the tongue and a locking face (28a) on the groove, wherein the locking faces (28a, 28b) are arranged on the groove and on the tongue between the surfaces (10, 12) of the panels (2, 4) at the height of the groove bottom (16), **characterized in that** the height of the locking faces (28a, 28b) is not more than 20% of the maximum height of the long groove cheek (18),
- at least the top bearing surface (24a) of the groove and the surface section (38) facing the groove bottom (16) at the free end (20) of the long groove cheek (18) are positioned obliquely to the top surface (10) of the panel (2), at an angle δ and
- at least sections of the top face (30) of the long groove cheek (18) are arranged at an angle ε with respect to the top surface of the panel, which is about half of angle δ.

2. The panel according to claim 1, **characterized in that** the angle ε is up to 10°, preferably up to 7°, particularly preferably up to 5° with respect to the top surface (10) of the panel (2).

3. The panel according to claim 1, **characterized in that** in the joined state of two panels, with the exception of the locking faces (28a, 28b), free spaces (34, 36) are provided between the free end (20) of the long groove cheek (18) and the tongue.

## Revendications

1. Panneau préparé à être connecté mécaniquement à au moins un autre panneau similaire par rotation, avec
- un profilé à rainure et ressort (6, 8) pour l'assemblage par complémentarité de forme mais sans serrage du panneau (2, 4) avec l'autre panneau à la même hauteur l'un par rapport à l'autre, présentant un profilé à rainure (6) avec une joue de rainure courte (14), un fond de rainure (16) et une joue de rainure longue (18) sur au moins un côté du panneau, et un profilé à ressort (8) correspondant au profilé à rainure (6) sur au moins un autre côté du panneau, dans lequel la joue de rainure longue (18) présente une épaisseur plus importante à son extrémité libre (20) que dans la région située en-dessous de l'extrémité libre de la joue de rainure courte (14), et dans lequel, lorsque les deux panneaux sont assemblés, la rainure et le ressort respectivement présentent des surfaces de contact supérieures (24a, 24b) inclinées vers la surface supérieure (10) du panneau (2, 4) et des surfaces de contact inférieures (26a, 26b) arrondies, et avec
- des moyens de blocage (28a, 28b) pour la fixation du panneau (2, 4) avec l'autre panneau sur un même plan l'un par rapport à l'autre, présentant une surface de blocage (28b) sur le ressort et une surface de blocage (28a) sur la rainure, les surfaces de blocage (28a, b) sur la rainure et sur le ressort étant agencées entre les surfaces (10, 12) des panneaux (2, 4) à la hauteur du fond de rainure (16), **caractérisé en ce que** la hauteur des surfaces de blocage (28a, 28b) ne dépasse pas 20% de la hauteur maximale de la joue de rainure longue (18),
- au moins la surface de contact supérieure (24a) de la rainure et la section de surface (38) tournée vers le fond de rainure (16) à l'extrémité libre (20) de la joue de rainure longue (18) sont disposées en biais par rapport à la surface supérieure (10) du panneau (2), sous un angle δ, et
- au moins des sections du côté supérieur (30) de la joue de rainure longue (18) sont agencées sous un angle ε par rapport à la surface supérieure du panneau mesurant environ la moitié de l'angle δ.

2. Panneau selon la revendication 1, **caractérisé en ce que** l'angle ε mesure jusqu'à 10°, de préférence jusqu'à 7° et de manière particulièrement préférée jusqu'à 5° par rapport à la surface supérieure (10) du panneau (2).

3. Panneau selon la revendication 1, **caractérisé en ce que** dans l'état assemblé de deux panneaux, à l'exception des surfaces de blocage (28a, 28b), il est prévu des espaces libres (34, 36) entre l'extrémité libre (20) de la joue de rainure longue (18) et le ressort.
